# EUROPÄISCHE PATENTSCHRIFT

(11) **EP 1 695 034 B1**
(45) Veröffentlichungstag und Bekanntmachung des Hinweises auf die Patenterteilung: **14.11.2007**
(21) Anmeldenummer: 04797839.0
(22) Anmeldetag: 12.11.2004
(51) Int. Cl.: G01D 3/02, G01D 18/00

(54) **MESSVORRICHTUNG**
MEASURING DEVICE
DISPOSITIF DE MESURE

(30) Priorität: 11.12.2003 DE 10357856
(43) Veröffentlichungstag der Anmeldung: 30.08.2006
(73) Patentinhaber: SARTORIUS AG, 37075 Göttingen (DE)
(72) Erfinder: DUDDA, Olaf, 37081 Göttingen (DE); BIETTE, Doug, USA - 60 80602 (US); OLDENDORF, Christian, 37077 Göttingen (DE)
(86) Internationale Anmeldenummer: PCT/EP2004/012817
(87) Internationale Veröffentlichungsnummer: WO 2005/061995

(56) Entgegenhaltungen:
- GB-A- 2 183 342
- US-A- 4 672 306
- US-A- 5 347 476
- US-A1- 2003 065 467

## Beschreibung

Die Erfindung betrifft eine Messvorrichtung, umfassend einen austauschbaren Sensor mit einem dauerhaft angeschlossenen Signalkabel und einem kabelendseitigen Anschlussstecker zur Übertragung eines Sensorsignals, einen nichtflüchtigen elektronischen Datenspeicher mit sensorspezifischen Kalibrierdaten und ein Auswertungsgerät mit einer Anschlussbuchse zum Anschluss des Signalkabels, wobei in dem Auswertungsgerät eine Auswertung des Sensorsignals unter Verwendung der Kalibrierdaten vorgesehen ist.

Bei Messvorrichtungen mit austauschbaren Sensoren kann der jeweilige Sensor durch eine Steckerverbindung einfach von dem Auswertungsgerät getrennt werden. Somit können bei einem aufgetretenen Defekt, der vorwiegend an dem Sensor auftreten wird, aber auch an dem Auswertungsgerät vorkommen kann, diese Bauteile, z.B. zur Durchführung von Instandsetzungsarbeiten, einfach voneinander getrennt und gegen ein entsprechendes intaktes Bauteil ausgetauscht werden. Bei einer Verwendung unterschiedlicher Sensoren mit verschiedenen messtechnischen Eigenschaften, wie z.B. unterschiedlichen Messgrößen oder Messbereichen, können die Sensoren jeweils unter Weiterverwendung des Auswertungsgerätes ausgewechselt werden, wobei das Auswertungsgerät dann durch entsprechende Einstellungen an die geänderten messtechnischen Eigenschaften des Sensors angepasst wird. An derartigen Messvorrichtungen muss aber nachteilig nach jedem Wechsel eines Bauteils, insbesondere eines Sensors, jeweils eine Kalibrierung der gesamten Messvorrichtung vorgenommen werden, deren Ergebnis in Form von Kalibrierdaten zumeist auf einem Datenspeicher des Auswertungsgerätes oder eines nachgeschalteten PCs abgespeichert wird. Dies ist nicht nur sehr zeitaufwändig und teuer, sondern ergibt nachteilig auch keine sichere Verknüpfung des jeweiligen Sensors mit den zugeordneten Kalibrierdaten. Es kann somit zur Verwechslung oder sogar zum Verlust von Kalibrierdaten kommen.

Zur Zuordnung von Identifikationsdaten zu einem Sensor eines Messgerätes ist es seit längerem bekannt, ein Datenschild mit lesbarem Code an dem Sensor selbst oder an einem mit dem Sensor dauerhaft verbundenen Bauteil, wie z.B. einem Anschlusskabel, zu befestigen. So ist aus der DE 37 09 717 A1 und der DE 83 21 954 U1 eine Waage (Messvorrichtung) bekannt, die eine Wägezelle (Sensor) mit einem dauerhaft angeschlossenen Signalkabel und einem kabelendseitigen Anschlussstecker und ein Auswertungsgerät mit einem Anzeigefeld (Display) und einer Anschlussbuchse zum Anschluss des Signalkabels umfasst. An dem Signalkabel ist ein Datenschild mit lesbaren messtechnischen Kenndaten, wie dem Messbereich der Wägezelle und Angaben zum Datum der letzten Eichung und der Gültigkeit der Eichung, untrennbar derart befestigt, dass sich das Datenschild bei angeschlossener Wägezelle in unmittelbarer Nähe des Displays des Auswertungsgerätes befindet und somit die messtechnischen Kenndaten vorschriftsmäßig ablesbar sind. Eine sichere Zuordnung der betreffenden Kalibrierdaten zu der jeweiligen austauschbaren Wägezelle ist hierdurch aber nachteilig nicht gegeben. Weiterhin nachteilig ist dabei eine herstellerspezifische Verbindung notwendig, so dass nicht Sensoren beliebiger Hersteller verwendet werden können.

Aus Produktbeschreibungen der Firma Dallas Semiconductor ist eine Messvorrichtung bekannt, die einen austauschbaren Sensor mit einem dauerhaft angeschlossenen Signalkabel und einem kabelendseitigen Anschlussstecker und ein Auswertungsgerät mit einer Anschlussbuchse zum Anschluss des Signalkabels umfasst. Ein als EPROM oder EEPROM ausgebildeter Datenspeicher, auf dem sensorspezifische Kalibrierdaten des Sensors abspeicherbar sind, ist innerhalb des Anschlusssteckers angeordnet. Hierdurch wird zwar eine relativ sichere Zuordnung der Kalibrierdaten zu dem Sensor erreicht und durch die gemeinsame Steckerverbindung eine einfache Handhabung gewährleistet. Jedoch wird hier eine herstellerspezifische Sonde mit einem speziellen Stecker benötigt. Durch die Anordnung des Datenspeichers innerhalb des Anschlusssteckers ist zudem nachteilig eine Beschädigung oder Manipulation des Datenspeichers bei geöffnetem Anschlussstecker möglich. Des Weiteren kann es aufgrund der räumlichen Nähe des Datenspeichers und der zugeordneten Datenleitungen zu den Signalleitungen des Signalkabels innerhalb des Anschlusssteckers zu einer elektromagnetischen Wechselwirkung kommen, die bei der Signal- bzw. Datenübertragung mit einer Verfälschung der Sensorsignale und / oder der Kalibrierdaten verbunden ist.

In US4672306 wird ein Messfühler beschrieben, dessen Anschlussstecker zum Messgerät einen Speicher mit Kalibrierdaten beinhaltet. Messwertsignale und Kalibrierdaten werden über getrennte Leitungen zum Messgerät übertragen.

Es ist daher die Aufgabe der vorliegenden Erfindung, eine Messvorrichtung der eingangs genannten Art vorzuschlagen, durch die eine sichere und störungsfreie Zuordnung der Kalibrierdaten zu dem jeweiligen austauschbaren Sensor gewährleistet ist. Auch soll ein handelsüblicher Sensor mit einem Standardstecker verwendbar sein.

Diese Aufgabe wird in Verbindung mit dem Oberbegriff des Anspruches 1 erfindungsgemäß dadurch gelöst, dass der Datenspeicher in einem separaten Speichergehäuse dauerhaft eingeschlossen ist, und dass das Speichergehäuse mittels eines Befestigungselementes untrennbar an dem Signalkabel oder dem kabelseitigen Anschlussstecker befestigbar ist.

Durch den dauerhaften Einschluss des Datenspeichers in einem separaten Speichergehäuse ist der bevorzugt durch ein EPROM oder ein EEPROM gebildete Datenspeicher sicher vor einem unbefugtem Zugriff, mithin vor einer Beschädigung und einem Austausch, geschützt. Somit ist ein Verlust und eine Manipulation der Kalibrierdaten sicher ausgeschlossen. Unter einem dauerhaften Einschluss bzw. untrennbarer Verbindung ist dabei zu verstehen, dass das Speichergehäuse von einem Laien nicht zerstörungsfrei bzw. von autorisiertem Servicepersonal nur mit einem Spezialwerkzeug geöffnet werden kann. Durch die untrennbare, d.h. nicht zerstörungsfrei trennbare, Verbindung des Speichergehäuses an dem Signalkabel ist eine sichere Verknüpfung der Kalibrierdaten mit dem zugeordneten Sensor gegeben, so dass eine Verwechslung von Kalibrierdaten unmöglich ist. Durch die untrennbare Verbindung lässt sich ein handelsüblicher Sensor mit einem Standardstecker verwenden und einfach, sicher und dauerhaft mit einem elektronischen. Datenspeicher zur Speicherung von sensorspezifischen Kalibrier- bzw. Kenndaten nachrüsten.

Vorteilhafte Ausgestaltungen der erfindungsgemäßen Messvorrichtung sind in den Unteransprüchen 2 bis 13 aufgeführt.

Nach einer bevorzugten Ausführungsform der Erfindung sind das Speichergehäuse und der separate Datenübertragungskanal mittels des Befestigungselementes beabstandet an dem Signalkabel oder dem kabelendseitigen Anschlussstecker befestigt. Durch die Beabstandung des Speichergehäuses bzw. des Datenspeichers von dem Signalkabel und der Verwendung eines separaten Datenübertragungskanals für die Übertragung der Kalibrierdaten wird bei der Signal- und Datenübertragung in das Auswertungsgerät eine gegenseitige elektromagnetische Wechselwirkung und somit eine Verfälschung des Sensorsignals und der Kalibrierdaten weitgehend verhindert.

Der austauschbare Sensor ist nach einer weiteren Ausführungsform der Erfindung als pH-Elektrode ausgebildet, deren Kalibrierdaten herstellerseitig in einem zeitlich vorgelagerten Kalibriervorgang durch eine Messung in mindestens einer Referenzflüssigkeit ermittelbar und in dem zugeordneten Datenspeicher abspeicherbar sind. Es kann somit preisgünstig sowohl ein standardisiertes Auswertungsgerät als auch eine standardisierte Messelektrode zur Bildung einer pH-Messvorrichtung verwendet werden. Dabei wird die preisgünstig beziehbare Messelektrode erst durch den Kalibriervorgang in Verbindung mit den auf dem Datenspeicher abgespeicherten Kalibrierdaten zu einem hochempfindlichen Spezialsensor.

Vorteilhaft können zusätzlich zu den Kalibrierdaten auch messtechnische Kenndaten des Sensors, wie z.B. Sensortyp, elektrische Anschlussdaten, Messbereich, Datum der letzten Kalibrierung, usw., auf dem Datenspeicher abgespeichert sein. Hierdurch ist durch ein Einlesen der Kenndaten eine automatische Selbstkonfigurierung des Auswertungsgerätes möglich, was auch die wechselweise Verwendung völlig unterschiedlicher Sensoren zusammen mit einem einzigen Auswertungsgerät erlaubt, beispielsweise eines pH-Sensors, eines Temperatursensors, eines Leitfähigkeitssensors oder auch eines optischen Sensors.

Zur Erzielung der untrennbaren Verbindung ist das Befestigungselement zweckmäßig als dauerhaft verschließbarer Halteclip mit mindestens einer Rastnase und einer zugeordneten Rastvertiefung ausgebildet, wobei als Material des Halteclips sowohl ein Metall als auch ein stabiler Kunststoff in Frage kommt. In einer besonders vorteilhaften Ausführung ist der Halteclip einteilig mit dem Speichergehäuse verbunden, das als ein den Datenspeicher umschließender Aufnahmeraum des Befestigungselementes bzw. des Halteclips ausgebildet ist. Hierzu ist ein erster Teil des Speichergehäuses zusammen mit einem ersten Teil des Halteclips bevorzugt derart über ein Knickscharnier mit einem zweiten Teil des Speichergehäuses zusammen mit einem zweiten Teil des Halteclips verbunden, dass durch ein Zusammenschwenken beider Teile gleichzeitig das Speichergehäuse und der Halteclip dauerhaft verschließbar sind. Somit kann das Verschließen des Speichergehäuses und das Anschließen des Speichergehäuses an das Sensorkabel vorteilhaft in einem Arbeitsgang erfolgen.

Der separate Datenübertragungskanal zur Übertragung der Kalibrierdaten kann als Kabelverbindung ausgebildet sein, die ein dauerhaft mit dem Datenspeicher verbundenes Speicherkabel mit einem endseitigen Kabelstecker und eine an dem Auswertungsgerät angeordnete Steckerbuchse umfasst. Es ist aber auch möglich, dass der Datenübertragungskanal als drahtlose Verbindung ausgebildet ist, die einen in dem Speichergehäuse angeordneten dauerhaft mit dem Datenspeicher verbundenen Transponder mit einem Sende-/Empfangsteil und einer Sekundärantenne und eine an dem Auswertungsgerät angeordnete Primärantenne umfasst. Dabei weist das Signalkabel, das Speicherkabel und / oder der Datenspeicher zur Vermeidung elektromagnetischer Störungen zweckmäßig eine Abschirmung auf. Bei Verwendung eines optischen Sensors bzw. eines Sensors, der ein optisches Ausgangssignal abgibt, das über einen optische Signale übertragenden Lichtleiter übertragen wird, wird das Abschirmproblem gänzlich vermieden.

Um die sichere Zuordnung der Kalibrierdaten und des betreffenden Sensors dem Nutzer bzw. Kunden auch als Qualitätsmerkmal zu verdeutlichen, ist vorteilhaft im Bereich des Sensors, d.h. sofern möglich an dem Sensor selbst oder zumindest an dem Signalkabel in der Nähe des Sensors, und auf dem Speichergehäuse jeweils ein identischer lesbarer Identifikationscode angeordnet. Dieser Identifikationscode kann beispielsweise eine Seriennummer sein, die auf beiden Bauteilen etwa in Form eines Klebeetiketts oder durch eine Laserbeschriftung aufgebracht wird.

Gemäß einer weiteren bevorzugten Ausführungsform der Erfindung ist es möglich, den Datenspeicher in Abhängigkeit von einem Sensorsignal mindestens eines weiteren Sensors eines gemeinsamen Messprozesses auszulesen. Bei einem als pH-Elektrode ausgebildeten Sensor kann der Datenspeicher beispielsweise in Abhängigkeit von einem Sensorsignal eines Temperatursensors und / oder eines Leitwertsensors ausgelesen werden.

Dem Datenspeicher kann zum Auswertungsgerät hin ein Mikroprozessor nachgeordnet sein, der in Abhängigkeit von den Signalen der weiteren Sensoren den Datenspeicher ausliest. Dabei kann der Mikroprozessor die aus dem Datenspeicher ausgelesenen Daten an das Auswertungsgerät weiterleiten. Der Mikroprozessor kann aber auch die aus dem Datenspeicher ausgelesenen Daten nutzen, um das Sensorsignal in Abhängigkeit von den Kalibrierdaten und den Daten der weiteren Sensoren zu korrigieren und als korrigiertes Messsignal an das Auswertungsgerät weiterzuleiten. Der Mikroprozessor kann mit dem Datenspeicher in dem Befestigungselement angeordnet sein. Es ist aber auch möglich, den Mikroprozessor in einem Adapterstecker anzuordnen, der beispielsweise direkt mit einem weiteren Sensor verbunden ist und optional auf das Befestigungselement aufgesteckt wird. Entsprechend kann über einen weiteren Adapterstecker auch ein weiterer Sensor aufgesteckt werden. Über die Adapterstecker wird einerseits eine Verbindung zu dem Datenspeicher und andererseits zu dem Auswertungsgerät hergestellt.

Den einem Sensor zugeordneten Datenspeicher für Kalibrier- und andere Daten direkt in Abhängigkeit von Signalen weiterer Sensoren eines gemeinsamen Messprozesses direkt auszulesen, ist unabhängig vom vorliegenden Anmeldungsgegenstand auch für bekannte Messvorrichtungen von Vorteil.

Weitere Einzelheiten der Erfindung ergeben sich aus der nachfolgenden ausführlichen Beschreibung und den beigefügten Zeichnungen, in denen bevorzugte Ausführungsformen der erfindungsgemäßen Messvorrichtung beispielhaft veranschaulicht sind.

In den Zeichnungen zeigen:
- Figur 1:: eine räumliche Darstellung einer erfindungsgemäßen Messvorrichtung in einer ersten Ausführungsform,
- Figur 2:: eine räumliche Darstellung eines Befestigungselementes mit einem Speicherkabel,
- Figur 3:: eine Draufsicht auf die erfindungsgemäße Messvorrichtung in einer zweiten Ausführungsform mit drahtloser Verbindung im Ausriss,
- Figur 4:: eine Draufsicht auf die erfindungsgemäße Messvorrichtung von Fig. 1 im Ausriss,
- Figur 5:: eine Draufsicht auf die erfindungsgemäße Messvorrichtung im Ausriss mit einem Befestigungselement am kabelendseitigen Anschlussstecker,
- Figur 6:: eine Draufsicht auf eine erfindungsgemäße Messvorrichtung im Ausriss mit einem zusätzlichen Mikroprozessor im Befestigungselement und zusätzlich angeschlossenen Sensoren und
- Figur 7:: eine Draufsicht auf eine erfindungsgemäße Messvorrichtung im Ausriss mit einem am Befestigungselement angekoppelten ersten Adapterstecker mit Mikroprozessor und angeschlossenem zweiten Sensor und einem zweiten Adapterstecker mit einem angeschlossenen dritten Sensor.

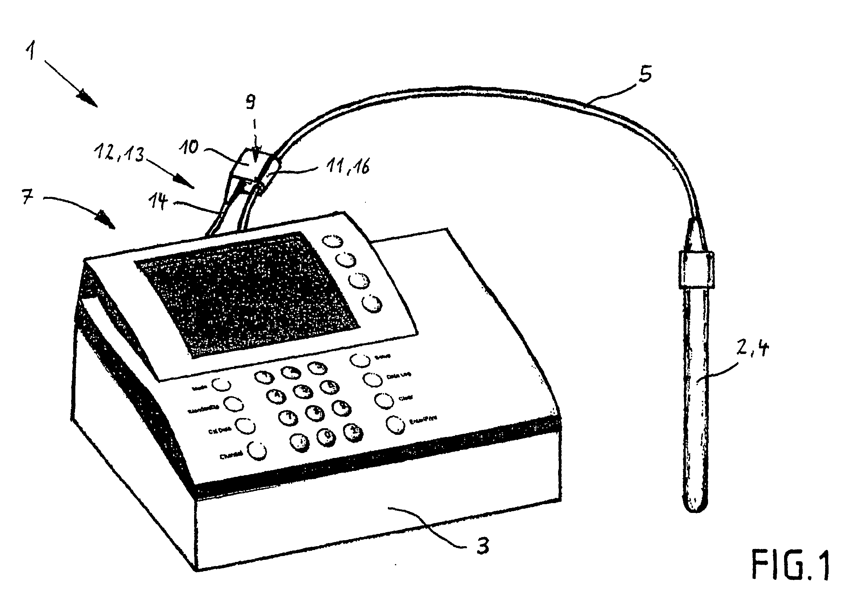

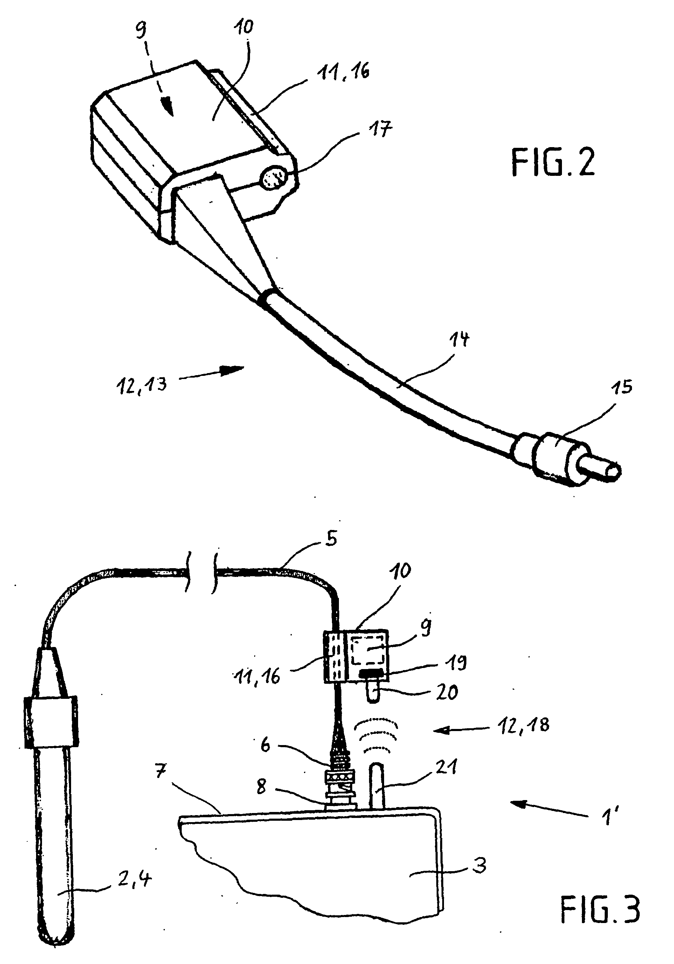

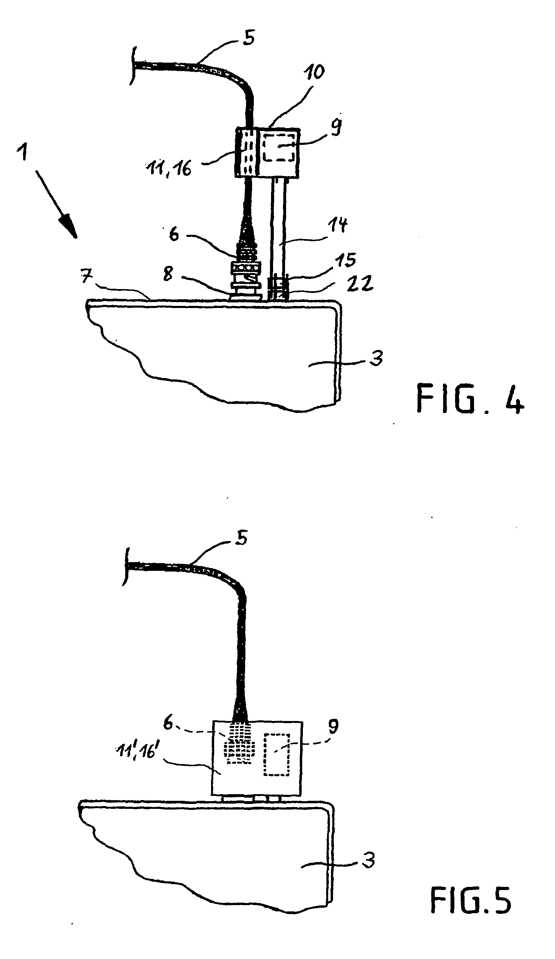

Eine Messvorrichtung 1 nach Fig. 1 umfasst als Hauptbauteile einen Sensor 2 und ein Auswertungsgerät 3. Der vorliegend als pH-Elektrode 4 ausgebildete Sensor 2 ist zur Übertragung eines Sensorsignals mit einem dauerhaft angeschlossenen Signalkabel 5 und einem kabelendseitigen Anschlussstecker 6 (s. Fig. 4) versehen und somit in Bezug auf das Auswertungsgerät 3 austauschbar ausgebildet. Das Auswertungsgerät 3 weist auf seiner Rückseite 7 eine Anschlussbuchse 8 zum Anschluss des Signalkabels 5 bzw. des Anschlusssteckers 6 auf Dem Sensor 2 ist ein nichtflüchtiger elektronischer Datenspeicher 9 zugeordnet, der bevorzugt als EPROM oder EEPROM ausgebildet ist, und auf dem sensorspezifische Kalibrierdaten des Sensors 2 abgespeichert sind, die zur Auswertung des Sensorsignals benötigt werden. Erfindungsgemäß ist der Datenspeicher 9 in einem separaten Speichergehäuse 10, das als ein den Datenspeicher 9 umschließender Aufnahmeraum eines Befestigungselementes 11 ausgebildet ist, dauerhaft eingeschlossen. Das Speichergehäuse 10 ist mittels des Befestigungselementes 11 untrennbar beabstandet an dem Signalkabel 5 befestigt. Zur Übertragung der Kalibrierdaten in das Auswertungsgerät 3 ist der Datenspeicher 9 über einen separaten Datenübertragungskanal 12, der vorliegend als Kabelverbindung 13 ausgebildet ist, mit dem Auswertungsgerät 3 verbunden, wobei die Kabelverbindung 13 ein dauerhaft mit dem Datenspeicher 9 verbundenes Speicherkabel 14 mit einem endseitigen Kabelstecker 15 (siehe Fig. 2) und eine auf der Rückseite 7 des Auswertungsgerätes 3 angeordnete Steckerbuchse 22 umfasst.

Das Befestigungselement 11 ist als dauerhaft verschließbarer Halteclip 16 mit mindestens einer Rastnase und einer zugeordneten Rastvertiefung ausgebildet, der vorliegend derart einteilig mit dem Speichergehäuse 10 verbunden ist, dass ein erster Teil des Speichergehäuses 10 zusammen mit einem ersten Teil des Halteclips 16 über ein Knickscharnier 17 mit einem zweiten Teil des Speichergehäuses 10 zusammen mit einem zweiten Teil des Halteclips 16 in Verbindung steht und der Halteclip 16 durch ein Zusammenschwenken beider Teile in einem Arbeitsschritt zusammen mit dem Speichergehäuse 10 dauerhaft verschließbar ist.

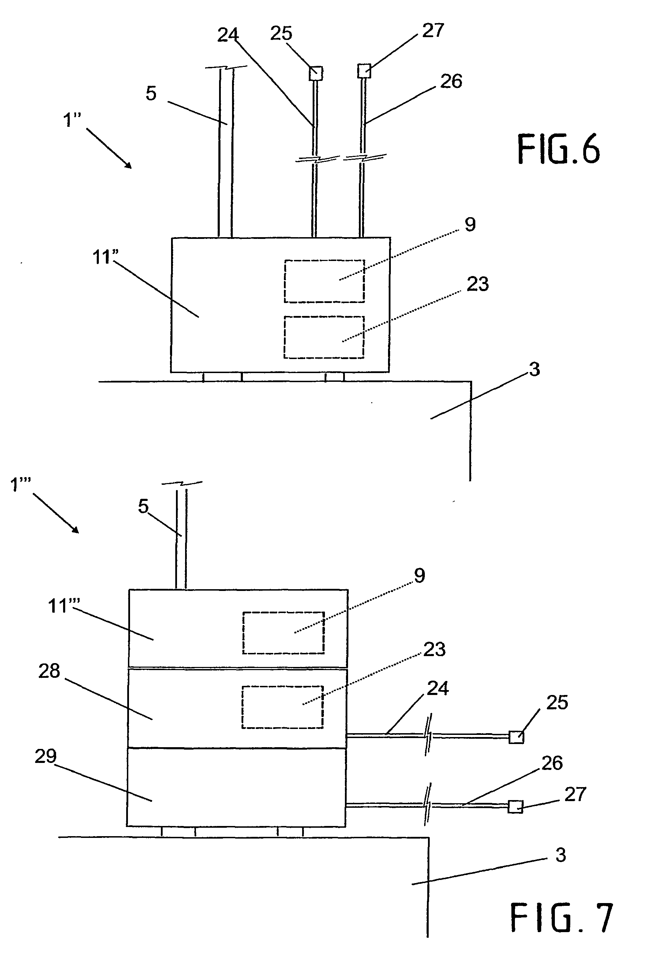

Entsprechend Figur 5 kann das Befestigungselement 11' bzw. der Halteclip 16' auch untrennbar an dem Kabelstecker 6 befestigt werden. Das Befestigungselement 11' kann dann über eigene Stecker mit dem Auswertungsgerät verbunden werden.

Durch die erfindungsgemäße Anordnung des Datenspeichers 9 wird eine sichere Verknüpfung der Kalibrierdaten mit dem zugeordneten Sensor 2 erzielt, d.h. Verwechslungen und Manipulationen der Kalibrierdaten sind nahezu unmöglich. Durch die beabstandete Anordnung des Datenspeichers 9 von dem Signalkabel 5 und durch die Verwendung eines separaten Datenübertragungskanals 12 für die Übertragung der Kalibrierdaten in das Auswertungsgerät 3 ist eine elektromagnetische Beeinflussung bzw. Störung zwischen dem Sensorsignal und den Kalibrierdaten und somit deren Verfälschung weitgehend ausgeschlossen.

In einer zweiten Ausführungsform der Messvorrichtung 1' nach Fig. 3 ist der Datenübertragungskanal 12 als eine drahtlose Verbindung 18 ausgebildet, die einen in dem Speichergehäuse 10 angeordneten dauerhaft mit dem Datenspeicher 9 verbundenen Transponder 19 mit einem Sende-/Empfangsteil und einer Sekundärantenne 20 und eine an dem Auswertungsgerät 3 angeordnete Primärantenne 21 umfasst. Um auch in diesem Fall eine störungsfreie Übertragung insbesondere des Sensorsignals zu erreichen, ist das Signalkabel 5 zweckmäßig mit einer elektromagnetischen Abschirmung versehen bzw. als abgeschirmtes Koaxialkabel ausgebildet.

In einer dritten Ausführungsform der Messvorrichtung 1" ist in dem Befestigungselement 11" zusätzlich zu dem Datenspeicher 9 ein Mikroprozessor 23 angeordnet. Das Befestigungselement 11" ist zum einen über das Signalkabel 5 mit dem Sensor 2 verbunden, der als pH-Elektrode 4 ausgebildet ist, und zum anderen ist das Befestigungselement 11" mit einem zweiten Signalkabel 24, das zu einem Temperatursensor 25 führt, und mit einem dritten Signalkabel 26, das zu einem Leitwertsensor 27 führt, verbunden.

In einer weiteren Ausführungsform nach Figur 7 ist der Mikroprozessor 23 in einem Adapterstecker 28 angeordnet, der mit dem Befestigungselement 11"' verbunden ist. Das zweite Signalkabel 24 ist in diesem Beispiel mit dem Adapterstecker 28 verbunden. Bei Verwendung des Leitwertsensors 27 kann dieser über einen zweiten Adapterstecker 29 über den ersten Adapterstecker 28 mit dem Befestigungselement 11'" verbunden werden.

Dem Mikroprozessor 23 werden die Signale der Sensoren 25, 27 direkt oder ggf. über den Datenspeicher 9 zugeführt, so dass der Mikroprozessor in Abhängigkeit von den Signalen der Sensoren 25, 27 die Sensordaten des Sensors 2 aus dem Datenspeicher 9 auslesen und an das Auswertungsgerät 3 direkt weiterleiten kann. Es ist aber auch möglich, dass der Mikroprozessor 23 das Sensorsignal des Sensors 2 in Abhängigkeit von den im Datenspeicher 9 gespeicherten Kalibrierdaten und den Daten der Sensoren 25, 27 korrigiert und als korrigiertes Messsignal an das Auswertungsgerät 3 weiterleitet.

## Patentansprüche

1. Messvorrichtung (1), umfassend einen austauschbaren Sensor (2) mit einem dauerhaft angeschlossenen Signalkabel (5) und einem kabelendseitigen Anschlussstecker (6) zur Übertragung eines Sensorsignals, einen nichtflüchtigen elektronischen Datenspeicher (9) mit sensorspezifischen Kalibrierdaten und ein Auswertungsgerät (3) mit einer Anschlussbuchse (8) zum Anschluss des Signalkabels (5), wobei in dem Auswertungsgerät (3) eine Auswertung des Sensorsignals unter Verwendung der Kalibrierdaten vorgesehen ist, wobei der Datenspeicher (9) zur Übertragung der Kalibrierdaten über einen separaten Datenübertragungskanal (12) mit dem Auswertungsgerät (3) verbindbar ist, **dadurch gekennzeichnet, dass** der Datenspeicher (9) in einem separaten Speichergehäuse (10) dauerhaft eingeschlossen ist, und dass das Speichergehäuse (10) mittels eines Befestigungselementes (11) untrennbar an dem Signalkabel (5) oder dem kabelendseitigen Anschlussstecker (6) befestigbar ist.

2. Messvorrichtung nach Anspruch 1, **dadurch gekennzeichnet, dass** das Speichergehäuse (10) und der separate Datenübertragungskanal (12) mittels des Befestigungselementes (11) beabstandet an dem Signalkabel (5) oder dem kabelendseitigen Anschlussstecker (6) befestigbar sind.

3. Messvorrichtung nach Anspruch 1 oder 2, **dadurch gekennzeichnet, dass** der austauschbare Sensor (2) als pH-Elektrode (4) ausgebildet ist, deren Kalibrierdaten in einem zeitlich vorgelagerten Kalibriervorgang durch eine Messung in mindestens einer Referenzflüssigkeit ermittelbar und in dem zugeordneten Datenspeicher (9) abspeicherbar sind.

4. Messvorrichtung nach einem der Ansprüche 1 bis 3, **dadurch gekennzeichnet, dass** zusätzlich messtechnische Kenndaten des Sensors (2) auf dem Datenspeicher (9) abgespeichert sind.

5. Messvorrichtung nach einem der Ansprüche 1 bis 4, **dadurch gekennzeichnet, dass** das Gehäuse (10) als ein den Datenspeicher (9) umschließender Aufnahmeraum des Befestigungselementes (11) ausgebildet ist.

6. Messvorrichtung nach einem der Ansprüche 1 bis 5, **dadurch gekennzeichnet, dass** das Befestigungselement (11) als dauerhaft verschließbarer Halteclip (16) mit mindestens einer Rastnase und einer zugeordneten Rastvertiefung ausgebildet ist.

7. Messvorrichtung nach Anspruch 6, **dadurch gekennzeichnet, dass** der Haltclip (16) einteilig mit dem Speichergehäuse (10) verbunden ist.

8. Messvorrichtung nach Anspruch 6 oder 7, **dadurch gekennzeichnet, dass** ein erster Teil des Befestigungselementes mit einem ersten Teil des Speichergehäuses (10) derart über ein Knickscharnier (17) mit einem zweiten Teil des Befestigungselementes (11) und einem zweiten Teil des Speichergehäuses (10) verbunden ist, dass durch ein Zusammenschwenken beider Teile diese dauerhaft miteinander verschließbar sind.

9. Messvorrichtung nach einem der Ansprüche 1 bis 8, **dadurch gekennzeichnet, dass** der Datenübertragungskanal (12) als Kabelverbindung (13) ausgebildet ist, die ein dauerhaft mit dem Datenspeicher (9) verbundenes Speicherkabel (14) mit einem endseitigen Kabelstecker (15) und eine an dem Auswertungsgerät (3) angeordnete Steckerbuchse umfasst.

10. Messvorrichtung nach einem der Ansprüche 1 bis 8, **dadurch gekennzeichnet, dass** der Datenübertragungskanal (12) als drahtlose Verbindung (18) ausgebildet ist, die einen in dem Speichergehäuse (10) angeordneten dauerhaft mit dem Datenspeicher (9) verbundenen Transponder (19) mit einem Sende-/Empfangsteil und einer Sekundärantenne (20) und eine an dem Auswertungsgerät (3) angeordnete Primärantenne (21) umfasst.

11. Messvorrichtung nach einem der Ansprüche 1 bis 10, **dadurch gekennzeichnet, dass** der Sensor (2) ein optisches Ausgangssignal abgibt und dass das Signalkabel (5) als ein optische Signale übertragender Lichtleiter ausgebildet ist.

12. Messvorrichtung nach einem der Ansprüche 1 bis 10, **dadurch gekennzeichnet, dass** das Signalkabel (5) und / oder der Datenspeicher (9) eine elektromagnetische Abschirmung aufweist.

13. Messvorrichtung nach einem der Ansprüche 1 bis 12, **dadurch gekennzeichnet, dass** im Bereich des Sensors (2) und auf dem Speichergehäuse (10) jeweils ein identischer lesbarer Identifikationscode angeordnet ist.

14. Messvorrichtung nach einem der Ansprüche 1 bis 13 **dadurch gekennzeichnet, dass** der Datenspeicher (9) in Abhängigkeit von einem Sensorsignal mindestens eines weiteren Sensors (25, 27) auslesbar ist.

15. Messvorrichtung nach einem der Ansprüche 1 bis 14, **dadurch gekennzeichnet, dass** der Datenspeicher (9) über eine Signalstrecke mit mindestens einem weiteren Sensor (25, 27) verbindbar ist.

16. Messvorrichtung nach einem der Ansprüche 14 oder 15, **dadurch gekennzeichnet, dass** der austauschbare erste Sensor eine pH-Elektrode (4) und der weitere Sensor als ein Temperatur- (25) und / oder ein Leitwertsensor (27) ausgebildet ist.

17. Messvorrichtung nach einem der Ansprüche 14 bis 16, **dadurch gekennzeichnet, dass** dem Datenspeicher (9) zum Auswertungsgerät (3) hin ein Mikroprozessor (23) nachgeordnet ist, der in Abhängigkeit von den Signalen der weiteren Sensoren (25, 27) den Datenspeicher (9) ausliest.

18. Messvorrichtung nach Anspruch 17, **dadurch gekennzeichnet, dass** der Mikroprozessor (23) die aus dem Datenspeicher (9) ausgelesenen Daten an das Auswertungsgerät (3) weiterleitet.

19. Messvorrichtung nach Anspruch 17, **dadurch gekennzeichnet, dass** das Sensorsignal von dem Mikroprozessor (23) in Abhängigkeit von den Kalibrierdaten und den Daten der weiteren Sensoren (25, 27) korrigierbar und als korrigiertes Messsignal an das Auswertungsgerät (3) weiterleitbar ist.

20. Messvorrichtung nach einem der Ansprüche 17 bis 19, **dadurch gekennzeichnet, dass** der Mikroprozessor (23) in dem Befestigungselement (11") angeordnet ist.

21. Messvorrichtung nach einem der Ansprüche 17 bis 19, **dadurch gekennzeichnet, dass** der Mikroprozessor (23) in einem Adapterstecker (28) angeordnet ist.

22. Messvorrichtung nach einem der Ansprüche 15 bis 21, **dadurch gekennzeichnet, dass** der weitere Sensor (25, 27) über einen mit dem Befestigungselement (11'") verbindbaren Adapterstecker mit dem Datenspeicher und / oder Mikroprozessor verbindbar ist.

## Claims

1. Measuring device (1) comprising an exchangeable sensor (2) with a permanently connected signal cable (5) and a connecting plug (6), which is at the cable end, for transmission of a sensor signal, a non-volatile electronic data store (9) with sensor-specific calibrating data and an evaluating apparatus (3) with a connecting socket (8) for connection of the signal cable (5), wherein an evaluation of the sensor signal with use of the calibrating data is provided in the evaluating apparatus (3) and wherein the data memory (9) is, for transmission of the calibrating data, connectible with the evaluating apparatus (3) by way of a separate data transmission channel (12), **characterised in that** the data memory (9) is permanently included in a separate memory housing (10) and that the memory housing (10) is non-separably fastenable by means of a fastening element (11) to the signal cable (5) or to the connecting plug (6) at the cable end.

2. Measuring device according to claim 1, **characterised in that** the memory housing (10) and the separate data transmission channel (12) are fastenable by means of the fastening element (11) at a spacing to the signal cable (5) or to the connecting plug (6) at the cable end.

3. Measuring device according to claim 1 or 2, **characterised in that** the exchangeable sensor (10) is constructed as a pH electrode (4), the calibrating data of which is ascertainable in an advance calibrating process by measuring in at least one reference liquid and are storable in the associated data memory (9).

4. Measuring device according to one of claims 1 to 3, **characterised in that** additional measurement characteristic data of the sensor (2) are stored on the data memory (9).

5. Measuring device according to one of claims 1 to 4, **characterised in that** the housing (10) is constructed as a receiving space, which encloses the data memory (9), of the fastening element (11).

6. Measuring device according to one of claims 1 to 5, **characterised in that** the fastening element (11) is constructed as a permanently closable retaining clip (16) with at least one detent lug and an associated detent depression.

7. Measuring device according to claim 6, **characterised in that** the retaining clip (16) is integrally connected with the memory housing (10).

8. Measuring device according to claim 6 or 7, **characterised in that** a first part of the fastening element with a first part of the memory housing (10) is connected in such a manner by way of a flexible hinge (17) with a second part of the fastening element (11) and a second part of the memory housing (10) that the two parts are permanently closable together by pivotation together thereof.

9. Measuring device according to one of claims 1 to 8, **characterised in that** the data transmission channel (12) is constructed as a cable connection (13) which comprises a memory cable (14), which is permanently connected with the data memory (9), with a cable plug (15) at the end and a plug socket arranged at the evaluating apparatus (3).

10. Measuring device according to one of claims 1 to 8, **characterised in that** the data transmission channel (12) is constructed as a wire-free connection (18) which comprises a transponder (19), which is arranged in the memory housing (10) and permanently connected with the data memory (9), with a transmitter/receiver part, a secondary antennae (20) and a primary antennae (21), which is arranged at the evaluating apparatus (3).

11. Measuring device according to one of claims 1 to 10, **characterised in that** the sensor (2) issues an optical output signal and that the signal cable (5) is constructed as an optical waveguide transmitting optical signals.

12. Measuring device according to one of claims 1 to 10, **characterised in that** the signal cable (5) and/or the data memory (9) have an electromagnetic screening.

13. Measuring device according to one of claims 1 to 12, **characterised in that** a respective identical readable identification code is arranged in the region of the sensor (2) and on the memory housing (10).

14. Measuring device according to one of claims 1 to 13, **characterised in that** the data memory (9) is readable in dependence on a sensor signal of at least one further sensor (25, 27).

15. Measuring device according to one of claims 1 to 14, **characterised in that** the data memory (9) is connectible with at least one further sensor (25, 27) by way of a signal path.

16. Measuring device according to one of claims 14 and 15, **characterised in that** the exchangeable first sensor is constructed as a pH electrode (4) and the further sensor as a temperature sensor (25) and/or a conductance sensor (27).

17. Measuring device according to one of claims 14 to 16, **characterised in that** a microprocessor (23) which reads out the data memory (9) in dependence on the signals of the further sensors (25, 27) is arranged downstream of the data memory (9) in direction towards the evaluating apparatus (3).

18. Measuring device according to claim 17, **characterised in that** the microprocessor (23) passes on to the evaluating apparatus (3) the data read out of the data memory (9).

19. Measuring device according to claim 17, **characterised in that** the sensor signal can be corrected by the microprocessor (23) in dependence on the calibrating data and the data of the further sensors (25, 27) and can be passed on as a corrected measurement signal to the evaluating apparatus (3).

20. Measuring device according to one of claims 17 to 19, **characterised in that** the microprocessor (23) is arranged in the fastening element (11").

21. Measuring device according to one of claims 17 to 19, **characterised in that** the microprocessor (23) is arranged in an adapter plug (28).

22. Measuring device according to one of claims 15 to 21, **characterised in that** the further sensor (25, 27) is connectible with the data memory and/or microprocessor by way of an adapter plug connectible with the fastening element (11"').

## Revendications

1. Dispositif de mesure (1), comprenant un capteur échangeable (2) avec un câble de signalisation (5) connecté de façon durable et une fiche de raccordement (6) du côté de l'extrémité du câble destiné à transmettre un signal de détection, une mémoire de données (9) électronique non volatile avec des données de calibrage propres au capteur et un appareil d'analyse (3) avec une douille de jonction (8) pour relier le câble de signalisation (5), moyennant quoi une analyse du signal de détection est prévu dans l'appareil d'analyse (3) avec utilisation des données de calibrage, moyennant quoi la mémoire de données (9) destinée à transmettre les données de calibrage peut être reliée à l'appareil d'analyse (3) par un canal de transmission de données (12) séparé, **caractérisé en ce que** la mémoire de données (9) est contenue de façon durable dans un boîtier de mémoire (10) séparé, et **en ce que** le boîtier de mémoire (10) peut être fixé de façon séparée au câble de signalisation (5) ou à la douille de jonction (6) du côté de l'extrémité du câble au moyen d'un élément de fixation (11).

2. Dispositif de mesure selon la revendication 1, **caractérisé en ce que** le boîtier de mémoire (10) et le canal de transmission de données (12) séparé peuvent être fixés au moyen de l'élément de fixation (11) à distance au niveau du câble de signalisation (5) ou de la douille de jonction (6) du côté de l'extrémité du câble.

3. Dispositif de mesure selon la revendication 1 ou 2, **caractérisé en ce que** le capteur échangeable (2) est conçu comme électrode pH (4), dont les données de calibrage peuvent être déterminées au cours d'une opération de calibrage précédente par une mesure dans au moins un liquide de référence et peuvent être mémorisées dans la mémoire de données (9) affectée.

4. Dispositif de mesure selon l'une quelconque des revendications 1 à 3, **caractérisé en ce qu'**en outre, des données caractéristiques techniques de mesure du capteur (2) peuvent être enregistrées dans la mémoire de données (9).

5. Dispositif de mesure selon l'une quelconque des revendications 1 à 4, **caractérisé en ce que** le boîtier (10) est conçu comme un espace de réception entourant la mémoire de données (9) de l'élément de fixation (11).

6. Dispositif de mesure selon l'une quelconque des revendications 1 à 5, **caractérisé en ce que** l'élément de fixation (11) est conçu comme un clip de retenue (16) verrouillable de façon durable avec au moins un tenon d'arrêt et un évidement d'arrêt affecté.

7. Dispositif de mesure selon la revendication 6, **caractérisé en ce que** le clip de retenue (16) est relié d'une seule partie au boîtier de mémoire (10).

8. Dispositif de mesure selon la revendication 6 ou 7, **caractérisé en ce qu'**une première partie de l'élément de fixation avec une première partie du boîtier de mémoire (10) est reliée via une charnière articulée (17) à une seconde partie de l'élément de fixation (11) et à une seconde partie du boîtier de mémoire (10), de sorte que les deux parties peuvent être fermées de façon durable l'une avec l'autre par un pivotement commun.

9. Dispositif de mesure selon l'une quelconque des revendications 1 à 8, **caractérisé en ce que** le canal de transmission de données (12) est conçu comme une liaison câblée (13), laquelle comprend un câble de mémoire (14) relié de façon durable à une mémoire de données (9) avec une prise de câble (15) du côté de l'extrémité et une douille de jonction disposée au niveau de l'appareil d'analyse (3).

10. Dispositif de mesure selon l'une quelconque des revendications 1 à 8, **caractérisé en ce que** le canal de transmission de données (12) est conçu comme une liaison sans fil (18), laquelle comprend un transpondeur (19) relié de façon durable à la mémoire de données (9) disposée dans un boîtier de mémoire (10) avec un élément d'émission/de réception et une antenne secondaire (20) et une antenne principale (21) disposée au niveau de l'appareil d'analyse (3).

11. Dispositif de mesure selon l'une quelconque des revendications 1 à 10, **caractérisée en ce que** le capteur (2) émet un signal de sortie optique et **en ce que** le câble de signalisation (5) est conçu comme un guide de lumière transmettant des signaux optiques.

12. Dispositif de mesure selon l'une quelconque des revendications 1 à 10, **caractérisé en ce que** le câble de signalisation (5) et/ou la mémoire de données (9) comporte un blindage électromagnétique.

13. Dispositif de mesure selon l'une quelconque des revendications 1 à 12, **caractérisé en ce qu'**un code d'identification lisible identique est disposé dans la région du capteur (2) et sur le boîtier de mémoire (10).

14. Dispositif de mesure selon l'une quelconque des revendications 1 à 13, **caractérisé en ce que** la mémoire de données (9) peut être lue en fonction d'un signal de détection d'au moins un autre capteur (25, 27).

15. Dispositif de mesure selon l'une quelconque des revendications 1 à 14, **caractérisé en ce que** la mémoire de données (9) peut être reliée via une ligne de signalisation à au moins un autre capteur (25, 27).

16. Dispositif de mesure selon l'une quelconque des revendications 14 ou 15, **caractérisé en ce que** le premier capteur échangeable est conçu comme une électrode pH (4) et l'autre capteur est conçu comme un capteur de température (25) et/ou un capteur de conductance (27).

17. Dispositif de mesure selon l'une quelconque des revendications 14 à 16, **caractérisé en ce qu'**un microprocesseur (23) est subordonné à la mémoire de données (9) pour l'appareil d'analyse (3), lequel microprocesseur lit la mémoire de données (9) en fonction des signaux des autres capteurs (25, 27).

18. Dispositif de mesure selon la revendication 17, **caractérisé en ce que** le microprocesseur (23) achemine les données lues de la mémoire de données (9) vers l'appareil de mesure (3).

19. Dispositif de mesure selon la revendication 17, **caractérisé en ce que** le signal de détection peut être corrigé par le microprocesseur (23) en fonction des données de calibrage et des données des autres capteurs (25, 27) et peut être acheminé comme signal de mesure corrigé au niveau de l'appareil d'analyse (3).

20. Dispositif de mesure selon l'une quelconque des revendications 17 à 19, **caractérisé en ce que** le microprocesseur 23 est disposé dans l'élément de fixation (11").

21. Dispositif de mesure selon l'une quelconque des revendications 17 à 19, **caractérisé en ce que** le microprocesseur (23) est disposé dans un adaptateur(28).

22. Dispositif de mesure selon l'une quelconque des revendications 15 à 21, **caractérisé en ce que** l'autre capteur (25, 27) peut être relié à la mémoire de données et/ou au microprocesseur via un adaptateur pouvant être relié à l'élément de fixation (11''').
